(19) **Europäisches Patentamt**

**European Patent Office**

**Office européen des brevets**

(11) **EP 0 837 903 B1**

(12) **EUROPEAN PATENT SPECIFICATION**

(45) Date of publication and mention
of the grant of the patent:
**22.12.2004 Bulletin 2004/52**

(51) Int Cl.⁷: **C08L 3/00**

(21) Application number: **96922068.0**

(86) International application number:
**PCT/FI1996/000403**

(22) Date of filing: **10.07.1996**

(87) International publication number:
**WO 1997/003121 (30.01.1997 Gazette 1997/06)**

(54) **MELTPROCESSIBLE STARCH COMPOSITION, A PROCESS FOR THE PREPARATION THEREOF AND THE USE OF THE COMPOSITION**

SCHMELZVERARBEITBARE STÄRKEZUSAMMENSETZUNG, VERFAHREN ZU IHRER HERSTELLUNG SOWIE VERWENDUNG DERSELBEN

COMPOSITION D'AMIDON PROPRE A ETRE TRAITEE PAR FUSION, SON PROCEDE DE PREPARATION ET SON UTILISATION

(84) Designated Contracting States:
**AT BE CH DE DK ES FR GB GR IE IT LI LU MC NL PT SE**

(30) Priority: **12.07.1995 FI 953409**

(43) Date of publication of application:
**29.04.1998 Bulletin 1998/18**

(73) Proprietor: **Valtion teknillinen tutkimuskeskus 02044 VTT (FI)**

(72) Inventors:
 • **HAPPONEN, Harri**
  **FIN-33580 Tampere (FI)**
 • **PELTONEN, Soili**
  **FIN-05200 Rajamäki (FI)**
 • **SIEVI-KORTE, Mika**
  **FIN-33710 Tampere (FI)**
 • **TÖRMÄLÄ, Pertti**
  **FIN-33720 Tampere (FI)**
 • **VUORENPÄÄ, Jani**
  **FIN-00250 Helsinki (FI)**

(74) Representative: **Sundman, Christoffer et al Patent Agents, Seppo Laine Oy, P.O.B. 339 00181 Helsinki (FI)**

(56) References cited:
 **WO-A-94/27796       WO-A-95/04106**

**Description**

The present invention relates to a melt-processible starch composition according to the preamble of claim 1. Such a composition crumbles in the compost.

The invention also relates to a process for the preparation of a starch composition that crumbles in the compost. According to said method a native starch is esterized in order to produce the plasticized starch derivative.

Environmental concerns and green concepts are creating new markets for products based on renewable resources. These trends are seen e.g. in the industrial sectors of packaging, hygiene and glue, for which recyclability, reusability. compostability, biodegradability and nonstressability of the environment are contemporary requirements. There is also an increasing trend to substitute petrochemically derived products with refined biopolymers.

Thermoplastization of natural polymers, in particular starch. is discussed in a large number of patents and patent applications (e.g. GB 2 190 093 A, US 4 673 438, EP 282 451 A3, EP 0 298 920 A3, EP 0 304 401 A2. EP 0 326 517 A1), which disclose opening of the granular structure of starch by melt processing generally in the presence of water and some plasticizer such as glycerol, ethylene glycol and oligomers thereof, and other adjuvants. Even if the products thus obtained are thermoplastic and biodegradable, their water resistance is poor which considerably limits their use. These kinds of thermoplastic starch products tend to absorb water when the humidity of air is high, which changes their mechanical properties. On the other hand, at low moisture contents. the water contained in the product evaporates and the products become more brittle.

Attempts have been made to improve the properties (water resistance and mechanical properties) of thermoplastic starches by blending them with synthetic polymers, as disclosed, e.g., in the following applications: EP 0 404 723 A2, EP 0 409 788 A3, EP 0 404 727 A3, EP 0 404 728 A3, EP 0 408 501 A3, EP 0 408 502 A3, EP 0 409 782 A3 and EP 0 409 781 A3, FI 902662, W0 92/19680, FI 921264 and EP 0 519 367 A1. Often the used synthetic polymers are hydrophilic and even if they do improve the mechanical properties the water resistance of the products still remains poor. The above-mentioned patent application describe improvement of the water resistance of thermoplastic starches by blending them with traditional thermoplastic polymers, polyolefins and polyesters, prepared from the raw materials of petrochemistry. The thus obtained blends and mixtures are heterophasic and their biodegradability is lowered due to the increased amounts of non-degradable components.

Starch has been mixed also with biodegradable synthetic polymers in addition to synthetic, nondegradable polymers (e.g. poly(caprolactone). polylactide), as has been described in the following patent applications and articles: WO 92/19680, EP 0 530 987 A1, EP 0 535 994 A1, Koenig, M.F. and Huang, S.J., Biodegradable Polymers / Starch Blends, Composites and Coatings, Polymer Materials Science Engineering 67(1992) s. 290-291. Starch has increased the biodegradability of the mixture, but essentially diminished the mechanical properties of the blends.

Known mixtures of natural polymer derivatives and starch/thermoplasticized starch are blends based on cellulose esters (acetate, propionate and butyrate and mixed esters thereof), described in US patent publications 5 280 055 and 5 288 318. In both patents starch is essentially unmodified. US patent 5 288 318 concerns blends and injection moulded pieces, prepared from cellulose acetate having a defined molar mass (28 000 - 62 000 Dalton), viscosity (3 - 44 s) and acetyl content (34 - 42 %), and unmodified starch, part of which may be granular. The share of cellulose acetate in the blend is 30 - 70 %, starch 10 - 60 % and plasticizer 5 - 35 %. A part of the cellulose acetate can be substituted with acetate prepared from waste paper, whole grain flour or starch. Cellulose acetate improves the water resistance of the hydrophilic, unmodified starch. In US patent publication 5 280 055 starch acetate has been used as compatibilizer to improve the blending of thermoplastic starch and cellulose ester. Cellulose ester improves the water resistance of the thermoplastic starch, but the mechanical properties diminish (tensile strength 25 --> ca 2 N/mm$^2$) as the share of starch the cellulose acetate butyrate mixture increases (20 % - > 70 %).

In the majority of the investigations above, the starch component is natural starch or starch modified in such a way that it can be plasticized in the presence of water and other hydrophilic plasticizers, or be used in granular form. A more hydrophobic mixture has been attempted through the blending components.

The following patents or patent publications concern starch derivatives and compositions prepared thereof. Largely, the modificates have been prepared from special starch, rich in amylose. Synthetic polymers based on petrochemical products have been used to control the properties.

US patent publication 3 553 196 and EP patent application 0 546 538 A1 describe the preparation of water soluble casting films form starch acetates having a low degree of substitution. prepared from starch rich in amylose. The usage of the materials is restricted by their water solubility.

In the method according to the application WO 92/16583 a biodegradable composition is described, which is produced by melt processing of a starch derivative, an ester or ether. a small amount of plasticizer (water) and alkenol homo- or copolymer (poly(vinyl alcohol)). The fraction of the alkenol polymer in the mixture is 10 - 200 parts to 100 parts of starch. The material has been used to produce candle covers by injection moulding and foamed products for packaging applications. The most suitable degree of substitution of the starch derivatives is > 0.8. for acetates preferably 0.8 - 1.5. No information has been given on the mechanical properties of the mixtures. The alkenol polymer used in the composition is based on petrochemical products, not on renewable resources. Its biodegradability is questionable.

Thermoplastic starch products have been produced also by plasticizing starch acetate with suitable plasticizers. The patent application WO 92/19675 describes a starch acyl derivative, especially acetate, produced from an amylose rich starch, and gelling thereof with biodegradable plasticizers, such as citric acid ethylene esters, glycerol acetates and lactic acid esters. The product has been described as humidity proof, thermoplastic, environmental friendly, translucent and processable to casting films. Good results can be achieved only with products rich in amylose, however, which constrains the choice of starch suitable as raw material.

From the patent application WO 93/20110 a degradable polymer composition is known, which can be processed with heat and pressure into products of high dimensional stability. The composition consists of a starch, which has been esterized from starch rich in amylose (minimum 50 %), and which owns a degree of substitution of at least 1.5 and which is plasticized with softeners (citrates, glyceric esters, phthalate, phosphates, succinates etc.) having molar masses of less than 2,000 g/mol, preferably in the range of 100 to 1,000 g/mol.

Fibre reinforced biodegradable materials with natural polymers as filling agents, primarily co- or homopolymers of glycolic acid, have been presented in the EP application 0 533 314. The application describes that the filling agents improve the physical and thermic properties of the biodegradable polymer. No mentioning of starch can be found in said publication.

Biodegradable natural polymer compositions have been presented also in the EP-application publication 0 393 825 and the US patent publication 5 306 550. These publications describe water absorbent, biodegradable polymer compositions, consisting of cellulose fibres, chitosane and gelatinized starch or thermoplastics. The compositions can be processed into films. The products are characterized by that they are water soluble and prepared from a water solution or dispersion. The desired form of the film can be obtained as the water is evaporated.

As a summary of the state of the technique, it can be concluded that no known solution has resulted in melt processable starch based polymer compositions, having good mechanical properties, that would consist only or at least substantially of materials derived from renewable raw material of low cost, and that are easily biodegradable.

It is an aim of the present invention to eliminate the problems relating to the prior art and to provide an entirely new melt processible, compostable starch composition, with excellent strength properties. It is also an aim of the invention to provide a novel method for the preparation of the starch composition and a method for enhancing the . biodegradability of starch based compositions.

The invention is based on the idea that a composition is formed, which contains plasticized starch derivative and a biodegradable fibre agent, and which has a discontinuous micro structure. The composition contains 5 to 99 weight % plasticized starch derivative, which forms the starch derivative phase, and 1 to 95 weight % fibre agent, which forms the fibre agent phase. The latter contributes discontinuous interfaces to the starch component, which enhance the hydrolytic decomposition of the composition. The starch derivative is an ester of starch and one or more aliphatic $C_{2-24}$ carboxylic acids.

Such a composition is characterized by that its impact strength is at least 10 % better than the values corresponding to a plasticized starch derivative. At the same time the composition decomposes very quickly in a biologic environment. for instance in contact with micro-organisms living in the soil.

More specifically, the composition according to the invention is characterized by what is stated in the characterizing part of claim 1.

Polymer products, such as boards and films, can be manufactured from the new compositions with methods known per se in polymer technology. The use of the compositions according to the invention is characterized by what is stated in claims 21-34.

Furthermore, the invention gives a new method for the production of a compostable starch composition. The method is characterized by that starch is esterized with an acetylating agent together with plasticizers containing OH-groups, such as glycerol, to produce a mixture, which contains starch acetate and an acetylated plasticizer, such as acetic glycerol esters. This mixture is blended with a biodegradable fibre agent to produce a composition having a discontinuous micro structure.

Optionally, cellulose pulp can be added to the mixture that is esterized, in addition to starch, esterizing agent and plasticizer, such as glycerol. In this case the reaction results in a plasticized blend, which contains cellulose ester in addition to starch ester and acetic glycerol ester.

More precisely the method according to the invention is characterized by what is stated in the characterizing part of claims 25 and 30, respectively.

Substantial benefits are attained by the invention. The raw materials of the starch composition according to the invention are primarily based on renewable resources and they are biodegradable/compostable. The starch component can be derived from any natural starch; it does not have to be starch rich in amylose. The composition is meltprocessible with ordinary plastic processing equipment. It has good mechanical and water resistance properties, which are controllable by changing the shares and qualities of the components of the composition. The impact strength values of the compositions according to the invention are, in comparison to material that contains no fibre agent, at least 10 %, preferably 50 % and most preferably even more than 100 % better.

The material fulfills also the requirements for food packaging by migration simulation tests, and is applicable to injection moulding, films, deep drawing, and to paper and cardboard coating.

Follows a more detailed description of the present invention together with examples of applications.

According to a preferred form of application of the invention the composition contains 30 - 95 wt-% plasticized starch derivative and 5 - 70 wt-% biodegradable fibre agent.

When the composition contains 50 wt-% or more plasticized starch derivative, this forms the continuous phase of the composition, in which the fibre agent phase forms discontinuous interfaces, which enhance the biodegradability of the composition.

The "plasticized starch component" means a product, which can be produced from native starch and which can be moulded at a moderate temperature, typically between room temperature and 200 "C, preferably at ca 30 - 180 "C. The starch component can be plasticized by introducing a plasticizing agent, in the presence of which the starch component typically dissolves and swells, or the plasticization can occur as a result of the plasticizing effect of the groups that are chemically bonded to the starch component.

The former method can be called external plasticization and it is applied, e.g., in the case of starch esters. The latter method can be called internal plasticization, and it is used, e.g., in the case of hydroxy alkyl derivatives of starch. The amounts of plasticized starch derivatives given above (5 - 99 % of the weight of the composition) comprise both the starch component and the amount of plasticizing agent, if such is used.

A composition containing plasticized native starch together with natural fibres is known from the WO application publication WO 95/04106. In connection with the present invention it has been noticed, however, that using starch derivatives selected from esters of starch and one or more aliphatic $C_{2-24}$ carboxylic acids instead of native starch as starch component, results in compositions having considerably higher impact strength and showing even three times higher water resistance than compositions produced from native starch. In spite of their excellent mechanical properties the compositions according to the invention are also compostable, however.

In WO 94/27769, a method of manufacturing fibre boards using starch or dextrin glues is disclosed. Starch is then transferred into a colloidal system with water as a solvent. It is suggested that the starch be modified chemically to improve dissolution or dispersion into an aqueous phase by, for example, enzymatic hydrolysis and acid hydrolysis. No mention of the use of starch esters of the above kind can be found in the document.

The plasticized starch derivative of the composition according to the invention, in the following called also the starch component, can be based on any natural starch having an amylose concentration of 0 to 100 % and an amylopectine concentration of 100 to 0 %.

Thus, the starch component can be derived from barley, potato, wheat, oat, peas, maize, tapioca, sago, rice and similar bulb or cereal plants. It can be based also on starch derivatives prepared from said natural starch by oxidation, hydrolyzation, cross-linking, cationization, grafting, etherification or esterification.

The starch-based component is derived from an ester formed by starch and one or several aliphatic $C_{2-24}$-carboxylic acids. The carboxylic acid component of an ester of this kind can then be derived from a lower alkane acid, such as acetic acid, propionic acid or butyric acid or a mixture thereof. The carboxylic acid component can, however, also be derived from natural saturated or unsaturated fatty acids. Palmitinic acid, stearic acid and mixtures thereof are examples of the fatty acids.

The ester can also comprise both long and short chained carboxylic acid components.

The mixed esters of acetate and stearate are examples of the latter esters.

The preparation of fatty acid esters of starch can be carried out for example as disclosed in the prior art publication by Wolff,I.A., Olds, D.W. and Hilbert.G.E., The acylation of Corn Starch, Amylose and Amylopectin, J.Amer. Chem.Soc. 73 (1952) 346-349 or Gros,AT. and Feuge,R.O., Properties of Fatty Acid Esters of Amylose, J.Amer.Oil Chemists's Soc 39 (1962) 19-24.

Starch acetate can be prepared by reacting starch with acetic anhydride in the presence of a catalyst. The catalyst used comprises for example, 50 % sodium hydroxide. Other preparation processes known in the art for preparation acetates are suitable for preparing starch acetate. By varying the amount of acetic anhydride, the amount of the alkali used as a catalyst. and the reaction time, it is possible to prepare starch acetates having different amounts of degrees of substitution. Barley starch is the model starch used in the examples; the same method is suitable also for other starches (for other natural starches, hydrolyzed starches, oxidized starch, etherified starch etc.).

The starch component is esterized starch, preferably starch acetate, having a degree of substitution of 0.5 - 3, preferably 1.0 - 3 and in particular 1.3 - 3.

As mentioned above, the starch component can be plasticized by blending it with a known softener, i.e. plasticizing agent. The composition according to the invention includes thus according to a preferred application in particular 0.01 - 50 wt-%, preferably ca 1-30 wt-% of plasticizer. Any known plasticizers can be applied, e.g. water, acetic glycerol esters, propylene glycol, dipropylene glycol. glycerol. citric acid alkyl esters and mixtures thereof.

When using hydroxy alkyl esters of starch for the starch component of the composition, a plasticizer does not necessarily have to be added to the composition, since this starch component is per se sufficiently easily moulded (internal plasticization).

Biodegradable polyesters can further be included in the compositions according to the invention. These can further improve the strength properties and the hydrophobic character of the composition. Polylactide, polycaprolactone and cellulose-based ester derivatives are examples of suitable polyesters. The compositions contain such derivatives in particular 0.01 - 30 wt-%, preferably ca 5 - 30 %. Cellulose acetate, cellulose propionate or cellulose butyrate or mixtures or mixed esters thereof are particular examples of the cellulose derivatives.

In addition to polyesters, biodegradable poly(ester urethanes) can be added to the compositions. As examples of these, let us mention hydroxy acid based polyesters coupled to each other by di-isocyanate compounds, and starch polymers to which polyesters (e.g. hydroxy acid based polyesters) are grafted by di-isocyanate compounds. Such compounds have good strength properties and including them can increase the same properties of the present compositions.

The compositions according to the invention comprise 1-95, preferably ca 5-45 wt-%, of a fibrous material, which strengthens the material and provides discontinuous interfaces, which enhance the absorption of water. The fibrous material or fibre agent is added to the rest of the material at any stage, at latest during the manufacturing of the intermediate product or the product, however. Organic fibres, inorganic fibres and mixtures thereof are examples of biodegradable fibres applicable to the invention. Preferably the fibre agent comprises fibres of a lactic acid based polymer (e.g. polylactide fibres), cellulose pulp (e.g. pine pulp), cereal cellulose fibres (e.g. barley bark pulp), cereal pentosan (e.g. barley bark pentosan), cotton fibres, Abaca hemp fibres, sisal fibres, ramie fibres, flax fibres, jute fibres or biodegradable glass fibres. Out of the organic fibre materials, the cellulose fibres improve the impact strength values by ca 10 - 100 % (compared to a nonconsolidated composition), other plant based fibres by ca 50 - 150 % and the hydroxy acid polymer fibres by ca 200 - 600 % . The compositions containing biodegradable glass fibres show impact strength values improved by ca 200 - 300 %.

Preferred compositions are listed in the following:

A composition comprising

- 40 - 90 wt-% starch acetate,
- 5 - 30 wt-% cellulose pulp
- 5 - 30 wt-% plasticizer and
- optionally 1 - 30 wt-% cellulose acetate

A composition comprising

- 40 - 95 wt-% hydroxy propyl starch,
- 5 - 30 wt-% cellulose pulp,
- 0 - 30 wt-% plasticizer and
- optionally 1 - 30 wt-% cellulose acetate

The present compositions can be prepared according to a method known per se by mixing the components of the composition, i.e., the starch based component, the optional cellulose derivative and the fibre agent, with each other. Preferably the starch component and the optional cellulose derivative are first melted.

In the new method according to the invention, designed for the preparation of starch acetate based compositions, the compositions are produced by esterizing the starch together with the plasticizer. Optionally, suitable esterizable cellulose material, such as chemical or mechanical cellulose pulp, can be added to the reaction blend, producing a mixture of plasticized starch acetate and cellulose acetate. As esterification agent, e.g. acetic anhydride can be used, and as plasticizer any substance mentioned above, such as glycerol or acetic acid glycerol ester. The composition is then mixed with a biodegradable fibre agent in order to obtain a composition having a discontinuous microstructure.

When the weight share of the starch derivative is above 0.5 the invention provides a composition, in which the starch acetate forms a continuous phase.

The starch compositions according to the invention are plastic and melt-processable. Typically the viscosity of the melt polymer is 10 - 5,000 Pa s, preferably 50 - 2,000 Pa s, measured with capillary rheometry at a temperature in the range of 140 to 200 °C and at a shear rate of 200 l/s. The present starch compositions can be mixed with other polymers, e.g., by melt blending, in order to produce polymer mixtures. Plasticizers and filling agents, known per se, can further be added to the mixtures. Suitable filling agents are starch and modified starch components.

Semi-manufactured and final products can be manufactured from the compositions according to the invention.

The products can be solid or at least partly hollow. Films and boards are examples of the products. The compositions can also be used for the coating of paper and cardboard, however. They can be used to produce specimens by injection moulding and products by compression moulding, thermoforming and blow moulding, such as packages, bags, sacks and bottles. Tooth mugs, flower pots and cocktail sticks are examples of special applications.

The compositions according to the invention have excellent properties of biodegradability; in particular the invention makes it possible to speed up the crumbling of products based on starch derivatives. This phenomenon will be examined in more detail in the following.

It is known that the biodegrading of starch derivative polymers in principle takes place in three phases: the phase of decreasing strength, the crumbling phase and the phase of return to circulation in Nature.

In the first phase, in which the products as such, or precrushed (in the following the "specimens"), are subjected to biodegrading conditions (e.g., composted, buried in the soil, or sunk in water). the products begin to adsorb water and various microorganisms begin to attach on their surfaces (e.g., bacteria, yeast, fungi, etc.). The strength of the products begins to weaken under the impact of the adsorbed water and the micro-organisms. The specimens retain their uniform form, until their strength reaches zero and/or the microorganisms have by their life functions corroded the specimens sufficiently. The phase of decreasing strength ends with that the specimen begins to disintegrate by the formation of fractures and crumbling. In the crumbling phase fractures, cavities and increasing corrosion begin to form in the specimen, which has lost its strength, and following this the specimen begins to crumble to particles. This is preferred and important for the composting. In particular, with respect to composting, it is preferred that the specimens crumble as quickly as possible into small pieces (having a maximum particle size (diameter) of ca 5 mm) after being mixed into the compost. Likewise it is preferred, that a specimen buried in the ground or sunk in water would crumble as quickly as possible after entering said environment.

Quick crumbling is preferred, because the crumbled material enters the third phase of biodegrading, i.e. the phase of return to circulation in Nature.

In the phase of return to natural circulation the small pieces (particles) of the crumbled specimen become part of the compost, soil humus, particles floating in water or bottom sediment. If the particles are biologically adaptable to the environment (i.e., do not release toxic elements as they decompose further), the specimens can be considered to have returned to natural circulation when they have crumbled into small parts. Because the crumbling dramatically increases the surface of the materials. the decomposing effect of the micro-organisms increase strongly after crumbling, whereby the crumbling extends to smaller and smaller particles at the same time as low molecular decomposition products dissolve from the particles for the micro-organisms to feed on. Part of the very small particles (typically less than 10 μm in diameter) can also be transported into the micro-organisms and become metabolized there. The most preferred result is that the original material returns in all to natural circulation, in which various particulate decomposition products can be further decomposed at their specific speed in the same way as particles derived from nature also decompose in natural humus.

The crumbling of specimens has a particularly high significance for composting, since slowly crumbling specimens can slow down the handling and function of the compost. This is the case especially for industrial composters, in which the compostable material should crumble as quickly as possible. Starch derivatives are hydrophobic, so they adsorb water relatively slowly. Also the surface corroding effect of the micro-organisms is slower for these derivatives than for, e.g., thermoplastic starch. Thus, there has been a need to quicken the crumbling of the manufactured products in biodegrading circumstances, such as in composting.

In this invention it has surprisingly been found that the crumbling of the manufactured product in biodegrading circumstances can be significantly improved through providing discontinuous interfaces, which enhance the absorption of water, by mixing biodegradable fibres into the material at latest during the manufacturing of the intermediate product (semi-manufacture) or product.

Without confining to any specific model or mechanism, it can be noted that the effect of the biodegradable fibres on the quickening of the crumbling of the starch derivative products, seems to be based on the fact that the fibres provide discontinuous interfaces in the internal structure of the material, along which the absorption of water happens more easily and more quickly. The fibres and the interfaces of the material surrounding them, function as channels that make it possible for humidity external to the product to diffuse into the material. The water that is absorbed into the material, makes the material swell and loosens the fibres and the surrounding material from each other. As a result of these changes the material strength weakens faster than the strength of a material that do not contain fibres. Swelling of the material, weakening of the fibre-polymer interfaces and the decrease of the material strength, result in the formation of fractures and the crumbling of the material begins earlier and proceeds faster than the crumbling of a corresponding material without fibres. This fact is of a high practical significance, since products containing biodegradable products will thus crumble and return to natural circulation, in compost, soil or water, quicker than products that do not contain fibres.

The following examples will describe the invention in more detail. The degrees of substition of the starch acetates as given in the examples are determined according to Wurzburg (Wurzburg, O.B., Acetylation, In: Methods in Carbohydrate Chemistry, Vol. IV, R.L. Whistler (Ed.), Academic Press, New York and London, 1964, p. 288). The molar masses are determined on the basis of GPC-analysis in the research laboratory of Alko Group Ltd. Equipment HP-1090, two columns in a cascade (Waters, Ultra Hydrogel 2000), solvent 50 nM NaOH, temperature 40 °C, dextran standards, detectors RI and viscosity detectors. Molar mass is determined from the starch used as raw material.

**Example 1**

Preparation of starch acetate

Starch acetates having different degrees of substitution and molar masses were prepared by using the reagent amounts described in the following table:

Table 1.

| Preparation of starch acetate, reaction conditions and product analysis | | | | | | | |
|---|---|---|---|---|---|---|---|
| Test no. | Starch quality | Amounts and reaction conditions | | | | Product analysis | |
| | | Amount of starch | Acetic anhydride | NaOH 50 % | Reaction time | Dry matter | D.S. |
| 1 | Native barley starch.[a] | 40 kg | 175kg | 4.4 kg | 10 h | 99.0% | 2.8 |
| 2 | " | 34 kg | 150 kg | 3.8 kg | 5 h | 91.4 % | 1.7 |
| 4 | Enzym. hydrol. barley starch[c] | 38 kg | 150 kg | 8.3 kg | 5 h | 96.6 % | 2.84 |
| 5 | Acid hydrol. barley starch[b] | 750 g | 3000 g | 165 g | 5 h | 98.8 % | 2.9 |

a,b and c are barley starch qualities of different molar masses (Table 2)

The starch or barley flour and the acetic anhydride were charged into a reactor and the agitation was turned on. The temperature of the mixture was raised to 60 °C and an 50 % aqueous sodium hydroxide solution was gradually added. The temperature of the reaction mixture increased by about 40 - 60 °C during the addition. After the addition of NaOH the temperature of the reaction mixture was raised to 125 °C for the time period indicated in the table. After the reaction the mixture was cooled and precipitated by adding an about 5-fold amount of water under vigorous agitation. The precipitate was filtered and washed with water until the pH of the washing water was > 5. The precipitate was spray-dried.

The relative differences between the molar masses of the starches used from acetate preparation have been characterized by Brabender-viscosity measurements. The determinations were carried out by using Brabender-viscoamylography. The instrument measures the momentum needed for balancing the viscosity increase of the starch slurry during a programmed heating cycle. The process is widely used in the starch industry for illustrating gelatinization of various starches and the properties of the formed pasta. A decrease of the molar mass will show as a lowering of the viscosity.

The results are given in the following Table 2:

Table 2.

| Brabender-viscosities and temperatures illustrating gelatinization of the starches used for preparing starch acetates | | | | | | | |
|---|---|---|---|---|---|---|---|
| Starch quality | Temperature at the outset of gelat. °C | Temperature at maximum viscosity °C | Brabender-viscosity [1] | | | | |
| | | | B1 (BU) | C (BU) | D (BU) | E (BU) | F (BU) |
| Native barley starch [a] | 61.1 | 89.6 | 2760 | 2332 | 1715 | 10 | 2445 |
| Enzym. hydrol. barley starch. [c] | 30.8 | 30.8 | 231 | 62 | 31 | 211 | 64 |
| Acid hydrol. barley starch [b] | 30.4 | 71.3 | 4 | 20 | 0 | 0 | 21 |

[1] Conditions of measuring the Brabender-viscosities:
- Starch content of aqueous slurry 12 %
- Heating cycle: Initial temperature 30 °C, increase of temperature to 95 °C at a rate of 1.5 °C/min and a temperature hold at 95 °C for 15 min, decrease of temperature to 55 °C at a rate of 1.5 °C/min and a temperature hold at 55 °C for 10 min.
- Rotation speed: 75 l/min
- Measurement area: 700 cmg
- Abbreviations:
B1 = Momentum at maximum viscosity
C = Momentum when the temperature had reached 95 °C
D = Momentum at the outset of the cooling cycle
E = Momentum when the temperature had reached 55 °C
F = Momentum at the end of the measurement
BU = Brabender unit

## Example 2

Preparation of plasticized starch acetate

Plasticized starch acetate was prepared from the following reagents:

Table 3.

| Reagents used in the preparation of plasticized starch acetate | | |
|---|---|---|
| Reagent | Product 2 a | Product 2b |
| Ohrakas* | 60 g | - |
| Thermoplastic starch acetate, DS 0.3** | - | 100 g |
| Glycerol | 40 g | - |
| Acetic acid anhydride | 250 g | 250 g |
| NaOH, 50 % | 22 g | 22 g |

* Native barley starch, manufactured by Primalco. Nurmijärvi

** Thermoplastic starch acetate is a starch acetate having a low degree of substitution, which has been preplasticized by melt agitating at a temperature of 140°C with water and glycerol (water 60 g, glycerol 60 g and 100 g starch acetate DS 0.3) for 14 min., whereby almost all water evaporated. Thermoplastic starch contains ca 40% glycerol.

Starch, glycerol and acetic acid anhydride were charged into the reactor under agitation. (The thermoplastic starch already contained the desired amount of glycerol.) The temperature of the blend was raised to 45 °C and an 50 % aqueous NaOH solution was gradually added. After the addition of sodium hydroxide the temperature of the reaction mixture was raised to 125 °C for 5 hours. The water that was formed during the reaction (and the acetic acid that might have been distilled) was collected with a water separator. The acetic acid and the acetic acid anhydride that might not have reacted was distilled from the reaction mixture under slight vacuum, cautiously so as not the acetic acid glycerol esters would yet be distilled. The temperature of the distillate was 38-42 °C and the pressure 80-100 mmHg. After the distillation the rest of the acetic acid (smell) was removed by nitrogen stripping.

The acetyl contents of the thus prepared thermoplastic starches were 2a: 30 % and 2b: 38 %.

**Example 3**

Preparation of cellulose starch acetate

Three different modifications of cellulose and starch by using the amounts of reagents given in following Table 4.

Table 4.

| Amounts of reagents used in the preparation of cellulose starch acetates | | | | |
|---|---|---|---|---|
| Test | Starch (g) | Acetic anhydride (g) | 50 % NaOH | Cellulose (g) |
| 1 | 100 | 400 | 15 | 40 |
| 2 | 100 | 400 | 15 | 40 |
| 3 | 100 | 700 | 15 | 40 |

Test 1

Starch and acetic anhydride were charged into a retort equipped with a motor agitator, refluxer, dropping funnel and a thermometer. The agitation was turned on and the temperature of the mixture was raised to 45 °C. An 50 % aqueous sodium hydroxide solution was cautiously dropped into the mixture. The temperature of the reaction mixture increased by about 40 - 60 °C during the addition. When all the NaOH had been added, the temperature of the reaction mixture was raised to 125 °C for 5 hours. After the reaction the mixture was cooled and precipitated from pulp slurry. The pulp slurry was prepared from 40 g dry cellulose chaff cut from a pulp sheet by slurrying and homogenizing with UltraTurrax in 5 litres of water. The precipitate was filtered and washed with plenty of water until pH > 5. The precipitate was dried at room temperature.

Test 2

The reaction was performed according to the method described in Test 1. After a reaction time of five hours, 40 g dry cellulose chaff cut from a pulp sheet was added to the reaction mixture, which was left for homogenization for 10 minutes. The mixture was precipitated from water and the precipitate was filtered, washed with plenty of water and air-dried at room temperature.

Test 3

Starch, acetic anhydride and 40 g dry cellulose chaff cut from a pulp sheet was added to the reaction equipment described in Test 1. Starch and cellulose was left to react for five hours at 125°C. After the reaction the mixture was precipitated from water, filtered and washed with plenty of water and air-dried.

The analysis of the products obtained in Tests 1,2 and 3 are presented in Table 5.

Table 5.

| Analysis of cellulose starch acetates | | | | |
|---|---|---|---|---|
| Test | Degree of substitution, DS | Dry matter (%) | Ash (%) | Molar mass of reagent starch (g/mol) |
| 1 | 2.15 | 98.5 | 0.15 | $M_w$=117,300 $M_w$ =32,170 |
| 2 | 2.31 | 98.7 | 0.13 | -"- |
| 3 | 1.63 | 98.1 | 0.22 | -"- |

**Example 4**

Preparation of a starch acetate cellulose fibre composition

The following composition (composition A) was prepared, comprising:

- 70 % by weight of enzymatically hydrolyzed starch acetate having a degree of substitution 2.84, and
- 30 % by weight of glycerol triacetate, manufactured under the brand name Priacetin 1580 (Unichema International)

The mixture was plasticized and mixed in Brabender Plasti-Corder$^R$ PL2000 W350E-measuring mixer. The mixing process was carried out under the following conditions:

Temperatures: 160 °C/160 °C (2 zones)
Speed of the blades: 52 rpm
Mixing time: 10 minutes

The thus mixed composition was then processed by a SP2-piston injection moulding machine into specimens suitable for the Charpy impact strength test. Moulding temperature was 160°C.

Impact strength was determined by International Standard SFS-ISO 179. The test specimens were of type ISO 179/2D (unnotched). Before testing the test specimens were stored in a closed plastic bag. The impact strength of the test specimens thus obtained was 2.8 kJ/m$^2$.

The following composition (composition B) was prepared, comprising:

- 60 % by weight of enzymatically hydrolyzed starch acetate having a degree of substitution was 2.84 (same as in composition A)
- 10 % by weight of pine cellulose fibres
- 30 % by weight of glycerol triacetate, manufactured under the brand name Priacetin 1580 (Unichema International; same as in composition A)

The same processing conditions and impact strength testing methods were used as for the composition A. The impact strength of the test specimens was 4.1 kJ/m$^2$.

The proportional impact strength was determined as follows:

Relative strength = Strength of Composition B / Strength of Composition A = 4.1 kJ/m$^2$ / 2.8 kJ/m$^2$ = 1.5

The impact strength of the composition could be enhanced by increasing the amount of cellulose fibres (shown in Table 6).

Table 6.

| Relative impact strength values of the starch acetate cellulose fibre compositions | |
| --- | --- |
| Composition | Relative impact strength |
| * 70 wt-% starch acetate (DS 2.84)<br>* 30 wt-% glycerol triacetate | 1.0 |
| * 60 wt-% starch acetate (DS 2.84)<br>* 10 wt-% pine cellulose fibres<br>* 30 wt-% glycerol triacetate | 1.5 |
| * 55 wt-% starch acetate (DS 2.84)<br>* 15 wt-% pine cellulose fibres<br>* 30 wt-% glycerol triacetate | 1.9 |
| * 50 wt-% starch acetate (DS 2.84)<br>* 20 wt-% pine cellulose fibres<br>* 30 wt-% glycerol triacetate | 3.3 |

**Example of comparison**

A mixture according to Example 1 of the patent WO 95/04106 was prepared and tested according to Example 4 above. The mixture comprised the following materials:

- starch 11.5 kg (of this 35 wt-% was plasticizer, sorbitol)
- ramie (or optionally sisal) 840 g (fibre length 0.5 mm)
- stearic acid 200 g

The ratio of starch/ramie/stearic acid was 91.7 / 6.7 / 1.6. A corresponding mixture was also prepared from starch acetate (DS 2.8), which was plasticized with glycerol triacetate. Sisal was used for the fibre, with a fibre length of 3-4 mm.

The relative impact strength values of the compositions thus obtained are presented in Table 7.

Table 7.

| Relative impact strength values of compositions of native starch and of starch acetate | |
|---|---|
| Composition | Relative impact strength |
| * 91.7 wt-% native starch (out of which 35 wt-% sorbitol)<br>* 6.7 wt-% sisal<br>* 1.6 wt-% stearic acid | 1.0 |
| * 91.7 wt-% starch acetate (out of which 35 wt-% glycerol triacetate)<br>* 6.7 wt-% sisal<br>* 1.6 wt-% stearic acid | 4.0 |

**Example 5**

Compositions comprising various biodegradable fibres

Starch based compositions were prepared as in Example 4 (composition B) with different biodegradable fibre materials. The processing conditions and testing methods were the same as in Example 4.

The following compositions were produced:

- 55 wt-% starch acetate (DS 2.84)
- 30 wt-% glycerol triacetate
- 15 wt-% various biodegradable fibres

The relative impact strength values of the compositions thus obtained are given in Table 8.

Table 8.

| Relative impact strength values of compositions containing various biodegradable fibres | |
|---|---|
| Biodegradable fibre material | Relative impact strength |
| PLA-fibres | 4.0 |
| Pine cellulose | 1.9 |
| Barley bark cellulose | 1.3 |
| Barley bark pentosan | 1.1 |
| Cotton | 1.4 |
| Abaca hemp | 2.4 |
| Sisal | 1.9 |
| Ramie | 2.2 |
| Flax | 2.7 |

Table 8.   (continued)

| Relative impact strength values of compositions containing various biodegradable fibres | |
| --- | --- |
| Biodegradable fibre material | Relative impact strength |
| Jute | 2.2 |
| Biodegradable glass | 2.5 |

**Example 6**

Compositions comprising starch acetate, glycerol triacetate and pine cellulose

Compositions comprising native starch acetate (DS 2.8), various amounts of glycerol triacetate and pine cellulose fibres were prepared and tested as in Example 4. The relative strength values of the thus obtained compositions are given in Table 9.

Table 9.

| Relative impact strength values of compositions comprising native starch acetate, glycerol triacetate and pine cellulose fibres | |
| --- | --- |
| Composition | Relative impact strength |
| * 63 wt-% starch acetate (DS 2.8)<br>* 22 wt-% glycerol triacetate<br>* 15 wt-% pine cellulose fibres | 1.0 |
| * 60 wt-% starch acetate (DS 2.8)<br>* 25 wt-% glycerol triacetate<br>* 15 wt-% pine cellulose fibres | 1.1 |
| * 57 wt-% starch acetate (DS 2.8)<br>* 28 wt-% glycerol triacetate<br>* 15 wt-% pine cellulose fibres | 1.5 |
| * 55 wt-% starch acetate (DS 2.8)<br>* 30 wt-% glycerol triacetate<br>* 15 wt-% pine cellulose fibres | 2.9 |

**Example 7**

Compositions comprising starch acetate, cellulose acetate and cellulose fibres
Cellulose acetate and cellulose fibres were mixed with starch acetate as in Example 4. The impact strength of the compositions was determined as in Example 4.
The relative impact strength values of the thus obtained compositions are given in Table 10.

Table 10.

| Relative impact strength values of compositions comprising starch acetate, cellulose acetate and cellulose fibres | |
| --- | --- |
| Composition | Relative impact strength |
| * 70 wt-% enzymatically hydrolyzed starch acetate (DS 2.84)<br>* 30 wt-% glycerol triacetate | 1.0 |
| * 50 wt-% enzymatically hydrolyzed starch acetate (DS 2.84)<br>* 30 wt-% glycerol triacetate<br>* 15 wt-% cellulose acetate (Aldrich)<br>* 5 wt-% pine cellulose fibres | 5.8 |
| * 50 wt-% enzymatically hydrolyzed starch acetate (DS 2.84) | 2.5 |

Table 10.   (continued)

| Relative impact strength values of compositions comprising starch acetate, cellulose acetate and cellulose fibres | |
| --- | --- |
| Composition | Relative impact strength |
| * 30 wt-% glycerol diacetate<br>* 10 wt-% cellulose acetate (Aldrich)<br>* 10 wt-% pine cellulose fibres | |

**Example 8** (illustrative only)

Compositions based on hydroxy propyl starch

Compositions containing hydroxy propyl starch (COHPOL DL 20. Primalco Ltd, Polymer unit (MS 1.44) and/ or glycerol and/or pine cellulose pulp fibres were prepared according to Example 4. The flexural strength and fixed elasticity modulus of the compositions were determined according to the standard ASTM D790M-86. The influence of the plasticizer and the cellulose fibres on the mechanical properties of hydroxy propyl starch were determined on basis of the impact strength, flexural strength and fixed elasticity modulus (Table 11). The elasticity modulus was determined only if the hydroxy propyl starch (HPS) clearly was elastic at room temperature.

Table 11.

| The properties of compositions containing hydroxy propyl starch | | | |
| --- | --- | --- | --- |
| Composition | Relative impact strength | Relative flexural strength | Relative elasticity modulus |
| * 100 wt-% HPS | 1.0 | 1.0 | |
| * 80 wt-% HPS<br>* 20 wt-% cellulosic fibres | 2.7 | 3.4 | |
| * 94 wt-% HPS<br>* 6 wt-% glycerol | 1.2 | 0.9 | |
| * 74 wt- % HPS<br>* 20 wt-% cellulosic fibres<br>* 6 wt-% glycerol | 3.8 | 3.5 | |
| * 88 wt- % HPS<br>* 12 wt-% glycerol | 1.4 | 0.1 | 1.0 |
| * 68 wt- % HPS<br>* 20 wt-% cellulosic fibres<br>* 12 wt-% glycerol | 7.3 | 0.9 | 13.2 |
| * 58 wt-% HPS<br>* 30 wt-% cellulosic fibres<br>* 12-wt-% glycerol | 10.4 | 1.8 | 31.3 |

**Example 9**

Preparation of injection moulded articles

The following compositions (compositions I and II) were prepared and they were plasticized and blended as described in Example 4:

I

- 75 wt-% native starch acetate (DS 1.7)
- 25 wt-% glycerol triacetate

II

- 60 wt-% native starch acetate (DS 1.7)
- 25 wt-% glycerol triacetate
- 15 wt-% pine cellulose pulp fibres

The thus obtained mixtures were crushed and injection moulded in an injection moulding machine, Engel 75, to form cup-shaped articles. The moulding temperature was 180 °C. The volume of the cup was about 0.25 dm$^3$, its weight was 50 g and the wall thickness about 2 mm.

A drop test was performed. 10 cups of each composition (I and II, respectively) were dropped on a stone floor from a height of 1 m.

All cups of composition I were broken down to small pieces. Not one of the cups prepared from composition II got any visible damages.

Further, by using the method of Example 4, a composition III was prepared for the purpose of comparing the product properties.

III

- 53 wt-% native starch acetate (DS 1.7)
- 10 wt-% commercial cellulose acetate (Dexel)
- 15 wt-% pine cellulose pulp fibres
- 22 wt-% glycerol triacetate

**Example 10**

Mixture of starch acetate/triacetin/calcium metaphosphate

Biodegradable glass fibres were prepared from calcium metaphosphate powder by melting it in a platinum crucible. The molten glass was drawn through a hole in the bottom of the crucible to form a fibre at a temperature of 1150 °C. The diameter of the fibre was about 10 μm and it was adjusted by regulating the drawing rate of the fibre. The fibres were assessed by drawing them through a dilute starch solution and reeling them on a bobbin. The flexural strength of the fibres was about 300 MPa and flexural modulus 25 GPa.

Preparation of composite material: A slightly twisted roving, consisting of ca 100 bioglass fibres, was drawn through the crosshead nozzle of the extruder at the same time as the crosshead nozzle was fed by the extruder with melt composition I according to Example 9. The bundle of fibres was impregnated with the polymer melt in the crosshead nozzle and a cylindrical composite parison (ca 0.2 mm in diameter) was drawn from the nozzle. The parison was cut in pieces of 7 cm length, and the pieces were compressed in a cylindrical compression mould into sticks with a cylindrical cross section. having a diameter of 2 mm and length of 6 cm. The flexural strength obtained for the sticks with three-point bending was 40 MPa. The flexural strength was 20 MPa for corresponding unconsolidated sticks. prepared from starch derivative by injection moulding (Composition I. Example 9).

**Example 11**

Compositions based upon grafted starch

Compositions were prepared from the grafted starch material described in Patent Application PCT/FI95/00148 (Example 6) containing 10 and 20 wt-% pine cellulose pulp fibres. The conditions of Example 4 were maintained during blending. The impact strengths of the obtained compositions were also determined according to the test method presented in Example 4.

The relative impact strength values of the thus obtained compositions are given in Table 12.

The impact strength of the grafted starch derivative can be improved by increasing the amount of cellulosic fibres in the composition.

Table 12.

| The relative impact strength values of compositions containing grafted starch derivatives and cellulosic fibres | |
|---|---|
| Composition | Relative impact strength |
| [*] Grafted starch derivative (material according to PCT/FI95/00148) | 1.0 |
| [*] 90 wt-% grafted starch derivative [*] 10 wt-% pine cellulose pulp fibres | 2.6 |
| [*] 80 wt-% grafted starch derivative [*] 20 wt-% pine cellulose pulp fibres | 3.9 |

In the following Examples, the product properties of the biodegradable starch composition according to the invention are examined.

**Example 12**

Preparation of a sheet from cellulosic fibres/starch acetate by compression moulding

A starch acetate/triacetin mixture plastisized according Example 9 was prepared using the components at the weight ratio 75/25. The degree of substitution of the starch acetate was 2.9.

The plasticized mass was cooled in liquid nitrogen and pulverized. The pulverized mass was filtered and the fraction below 0.25 mm was used in the compression moulding.

The mixture of cellulose fibre and plasticized starch acetate was premixed in a vessel in the ratios 90/10 (mixture A) and 70/30 (mixture B). The thus prepared mixture was charged evenly in a compression mould with a diameter of 98 mm. The thickness of the sheets produced was ca 1.5 mm. For comparison the corresponding board was prepared also out of sole cellulose fibre. The temperature of compression moulding was 150 °C, the time of compression 5 minutes and the force 100 kN. The mould was cooled to a temperature of ca 80°C, after which the mould was opened and the compression moulded board was removed from the mould.

From the compression moulded boards, test sticks were cut with the dimensions 15x1.5x60 mm. The sticks were stored in closed plastic bags between preparation and testing. For the test sticks the flexural strength was determined by three-point bending in a test adapted to the standard ASTM D 790-86. The results are given as relative values in Table 11 determined as in Example 3 for the pure cellulose fibre as compared to the compression moulded test sticks.

Table 13.

| Relative flexural strength values for compression moulded specimens | |
|---|---|
| Material | Relative flexural strength |
| Compression moulded cellulose fibre | 1.0 |
| Mixture A | 1.3 |
| Mixture B | 3.4 |

**Example 13**

Water adsorption tests

Water adsorption determinations for the biodegradable starch composition were made at VTT Biotechnology and Food Research. The samples were balanced in a chamber, the humidity of which had been regulated with saturated salt solutions. The salts LiCl, $Mg(NO_3)_2$, NaCl, $(NH_4)_2SO_4$, $KNO_3$ and $K_2SO_4$ were used. The relative humidity values were 12, 33, 56, 77, 91 and 97 %. The chamber was kept at 20 °C and the mass of adsorbed water was determined gravimetrically after 7 days.

The samples examined were starch acetates prepared as in Example 1, compositions II and III prepared as in Example 9, native barley starch and glycerol triacetate. The results of the water adsorption determination are given in Table 14.

Table 14.

| Water adsorption by starch, starch acetates, cellulose fibre, glycerol triacetate and fibre containing starch acetate compositions | | | | | | | |
|---|---|---|---|---|---|---|---|
| Material | Change of mass (in %) for varying humidity Relative humidity | | | | | | |
| | 0% | 12 % | 33 % | 56 % | 77 % | 91 % | 97 % |
| Native barley starch powder | 0 | 9 | 10 | 14 | 16 | 25 | 34 |
| Starch acetate powder Example 1/ Test 1 | 0 | 0 | 0 | 0 | 1 | 1.5 | 4 |
| Starch acetate powder Example 1/ Test 3 | 0 | 0 | 0.6 | 1.5 | 2.5 | 5.4 | 5.7 |
| Pulp fibre | 0 | 0 | 1 | 3.3 | 5.7 | 12 | 14 |
| Glycerol triacetate | 0 | 0.5 | 0.6 | 1 | 1.5 | 2.7 | 3 |
| Composition II / Ex. 9 (Granulate) | 0 | 0 | 0 | 1.0 | 2.3 | 6.5 | 10.5 |
| Composition III/ Ex. 9 (Granulate) | 0 | 0 | 0 | 1 | 1.5 | 6 | 9.8 |

The results show that the starch acetates clearly adsorb less water than native barley starch. For high water contents the granular compositions II and III adsorbed a little less water than pure pulp fibre, but clearly more than glycerol triacetate and the starch acetates of Tests 1 and 3 in Example 1.

**Example 14**

Migration tests

The total amount of elements that might migrate from the biodegradable starch compositions into foodstuffs, the so called total migration, was determined in the Laboratory of Bio- and Food Technology of the Technical Research Institute. The method that was used is described in the European prestandard ENV 1186-3 "Materials and Articles in Contact with Foodstuffs; Plastics-Test Methods for Overall Migration into Aqueous Food Simulants by Total Immersion". The determination is gravimetrical: the sample is immersed totally into the solution that emulates foodstuff, the simulant. Distilled water, 3 % acetic acid and 15 % ethanol (decision 262/92 of the Ministry of Trade and Industry, directive 85/572/EEC) were used as simulants. The test was performed in conditions according to the decision 261/92 of the Ministry of Trade and Industry, directive 82/711/EEC: 24 hours in 40 °C. A smaller test surface was used than what is recommended in the European prestandard: 0.2 dm$^2$ instead of 1 dm$^2$.
Table 15 presents the migration into foodstuffs of the compositions I, II and III as described in Example 9.

Table 15.

| Total migration of biodegradable starch compositions (mg/dm$^2$) into water, 3 % acetic acid and 15 % ethanol during 24 hours at 40 °C. | | | |
|---|---|---|---|
| Sample | Distilled water | 3 % acetic acid | 15 % ethanol |
| Composition I | 1.0 | 3.0 | 5.5 |
| Composition II | 0.7 | 1.5 | 0.8 |
| Composition III | 0.5 | 2.5 | 2.5 |

On the basis of the results, it can be noted that all tested samples are suited for short-term contact with moist, neutral, acid and alcoholic foodstuffs (10 mg/$^{DM}$ is the maximum allowable migration according to the decision 397/94 of the ministry of Trade and Industry). Furthermore, the results show that less migration occurs from the starch composition II, which contains fibre, than from the starch composition I without fibre.

**Example 15**

Biodegradability/compostability

The biodegradability of the starch compositions was tested with the Head-Space test developed at VTT Biotechnology and Food Research. The samples were weighed (15 g) into head-space bottles, into which was added 50 ml mineral salt solution and microbe graft prepared from compost in the thermophile stage. The sample bottles were incubated in water-bath at + 55 °C and the biodegradability was determined based on the carbon dioxide that was formed.

The biodegradability of the compositions II and III described in Example 9 was examined as a function of time. The biodegradability was determined as the ratio of the carbon dioxide that actually was released from the sample to the amount that theoretically could be released. The results showed that after 28 days 46 % more carbon dioxide had been released from the starch composition II and 25 % more from the composition III than from starch acetate as such.

**Claims**

1. A melt-processible, compostable starch composition, **characterized in that**

   a) the composition contains

   - 5 to 99 wt-% of a plasticized starch derivative and
   - 1 to 95 wt-% of a biodegradable fibrous material,

   the starch derivative being an ester of starch and one or more aliphatic $C_{2-24}$ carboxylic acids,
   b) the microstructure of the composition is discontinuous and formed by a starch derivative phase and a fibrous material phase and porosity, if any.

2. The composition according to claim 1, wherein the impact strength of the composition is at least 10 % better than that of the plasticized starch derivative.

3. The composition according to claim 1 or 2, wherein the composition contains about 30 to 95 wt-% of the plasticized starch derivative and 5 to 70 wt-% of the biodegradable fibrous material.

4. The composition according to any one of claim 1 to 3, wherein the composition contains at least 50 wt-% of the plasticized starch derivative, which forms the continuous phase of the composition, the fibrous material phase forming discontinuous interphases which enhance biodegrading of the composition.

5. The composition according to any one of claims 1 to 4, wherein the raw material of the starch derivatives is a native or enzymatically or chemically hydrolyzed starch having an amylose content of 0 to 100 % and an amyfopectine content of 100 to 0 %.

6. The composition according to claim 1, wherein the carboxylic acid component of the ester is derived from acetic acid, propionic acid or butyric acid or a mixture thereof.

7. The composition according to claim 1, wherein the carboxylic acid component of the ester is derived from a naturally occurring saturated or unsaturated fatty acid.

8. The composition according to claim 7, wherein the carboxylic acid component is derived from palmitinic acid, stearic acid or a mixture thereof.

9. The composition according to claim 1, wherein the starch component is a mixed ester of starch and acetic acid and stearic acid.

10. The composition according to any one of claims 1 to 8, wherein the degree of substitution of the esterified starch is 0.5 to 3, preferably 1 to 3, in particular 1.5 to 3.

11. The composition according of any one of the preceding claims, wherein the composition further contains 0.01 to 50 wt-%, preferably about 1 to 30 wt-% of a plasticizer.

12. The composition according to claim 11, wherein the plasticizer comprises water, glycerol esters of acetic acid, propylene glycol, dipropylene glycol, glycerol, alkyl esters of citric acid and/or mixtures thereof.

13. The composition according to any one of claims 1 to 12, wherein it further contains 0.01 to 30 wt-%, preferably about 5 to 30 wt-% of a biodegradable polyester, such as polylactide, polycaprolactone or a cellulose ester, such as cellulose acetate, propionate or butyrate or mixtures thereof or mixed esters thereof.

14. The composition according to any one of the preceding claims, wherein it contains 5 to 45 wt-% fibrous matter.

15. The composition according to any one of the preceding claims, wherein the dry matter of the composition is formed by fibres of a lactic acid polymer, by cellulose pulp, by cereal cellulose fibres, cereal pentosan, cotton fibres, fibres of Abaca hemp, sisal fibres, ramie fibres, flax fibres, jute fibres or biologically degradable glass fibres.

16. The composition according to claim 1, wherein it contains 40 to 90 wt-% starch acetate, 5 to 30 wt-% cellulose pulp and 5 to 30 wt-% plasticizing agent.

17. The composition according to claim 16, wherein it further contains 1 to 30 wt-% cellulose acetate.

18. A polymer blend, **characterized in that** it contains a polymer composition according to claim 1 mixed with a thermoplastic.

19. The polymer composition according to claim 1 or the polymer blend according to claim 18 mixed with plasticizers and/or fillers.

20. The polymer composition according to claim 1 or the polymer blend according to claim 18, wherein the filler used comprises starch or modified starch.

21. The use of a polymer composition according to any one of claims 1 to 17 for preparation of films or sheets.

22. The use of a polymer composition according to any one of claims 1 to 17 for preparation of injection moulded articles and for preparation of thermoformed and blow moulded articles, such as packages, bags, sacs and bottles.

23. The use of a polymer composition according to any one of claims 1 to 23 for coating of paper or cardboard.

24. The use of a polymer composition according to any one of claims 1 to 23 for preparation of articles made by compression moulding.

25. A process for preparing a compostable starch composition according to claim 1, wherein native starch is esterified in order to produce a plasticized starch derivative, **characterized by**

- esterifying the starch together with glycerol to produce a mixture containing starch acetate and a glycerol ester of acetic acid, and
- blending said mixture with a biodegradable fibrous material to produce a composition having a discontinuous microstructure.

26. The process according to claim 25, which comprises preparing a composition wherein starch acetate forms the continuous phase.

27. The process according to claim 25 or 26, wherein starch and glycerol are esterified with acetic anhydride.

28. The process according to any one of claims 25 to 27, wherein cellulose pulp is added to a mixture of starch and glycerol before the esterification, whereby a plasticized mixture is obtained after the reaction, which contains a starch ester, a glycerol ester of acetic acid and a cellulose ester.

29. The process according to claim 28, wherein pine pulp is used as cellulose pulp.

**30.** A process for preparing a compostable starch composition according to claim 1, wherein native starch is esterified in order to produce a plasticized starch derivative, **characterized by**

- esterifying starch together with cellulose pulp and glycerol to produce a plasticized mixture containing starch acetate, cellulose acetate and a glycerol ester of acetic acid, and
- blending said mixture with a biodegradable fibrous material to produce a composition having a discontinuous microstructure.

**31.** The process according to claim 31, which comprises preparing a composition wherein the plasticized starch acetate forms the continuous phase.

**32.** The process according to claim 31 or 32, wherein the starch, the cellulose pulp and the glycerol are esterified with acetic anhydride.

**Patentansprüche**

**1.** Schmelzverarbeitbare, kompostierbare Stärkezusammensetzung, **dadurch gekennzeichnet, daß**

a) die Zusammensetzung

- 5 bis 99 Gew.-% eines weichgemachten Stärkederivats und
- 1 bis 95 Gew.-% eines biologisch abbaubaren faserförmigen Materials

enthält, wobei das Stärkederivat ein Ester von Stärke und einer oder mehreren aliphatischen $C_{2-24}$-Carbonsäuren ist,
b) die Mikrostruktur der Zusammensetzung diskontinuierlich ist und durch eine Stärkederivat-Phase und eine Phase aus faserförmigem Material und Porosität, falls vorhanden, gebildet wird.

**2.** Zusammensetzung nach Anspruch 1, wobei die Schlagfestigkeit der Zusammensetzung mindestens 10% besser ist als die des weichgemachten Stärkederivats.

**3.** Zusammensetzung nach Anspruch 1 oder 2, wobei die Zusammensetzung etwa 30 bis 95 Gew.-% des weichgemachten Stärkederivats und 5 bis 70 Gew.-% des biologisch abbaubaren faserförmigen Materials enthält.

**4.** Zusammensetzung nach einem der Ansprüche 1 bis 3, wobei die Zusammensetzung mindestens 50 Gew.-% des weichgemachten Stärkederivats enthält, das die kontinuierliche Phase der Zusammensetzung bildet, wobei die Phase aus faserförmigem Material diskontinuierliche Zwischenphasen bildet, die den biologischen Abbau der Zusammensetzung verbessern.

**5.** Zusammensetzung nach einem der Ansprüche 1 bis 4, wobei das Ausgangsmaterial der Stärkederivate native oder enzymatisch oder chemisch hydrolysierte Stärke mit einem Amylosegehalt von 0 bis 100% und einem Amylapectingehalt von 100 bis 0% ist.

**6.** Zusammensetzung nach Anspruch 1, wobei die Carbonsäurekomponente des Esters von Essigsäure, Propionsäure oder Buttersäure oder einem Gemisch davon abgeleitet ist.

**7.** Zusammensetzung nach Anspruch 1, wobei die Carbonsäurekomponente des Esters von einer in der Natur vorkommenden gesättigten oder ungesättigten Fettsäure abgeleitet ist.

**8.** Zusammensetzung nach Anspruch 7, wobei die Carbonsäurekomponente von Palmitinsäure, Stearinsäure oder einem Gemisch davon abgeleitet ist.

**9.** Zusammensetzung nach Anspruch 1, wobei der Stärkebestandteil ein Mischester von Stärke und Essigsäure und Stearinsäure ist.

**10.** Zusammensetzung nach einem der Ansprüche 1 bis 8, wobei der Substitutionsgrad der veresterten Stärke 0,5 bis 3, vorzugsweise 1 bis 3, insbesondere 1,5 bis 3, beträgt.

**11.** Zusammensetzung nach einem der vorhergehenden Ansprüche, wobei die Zusammensetzung weiter 0,01 bis 50 Gew.-%, vorzugsweise etwa 1 bis 30 Gew.-%, eines Weichmachers enthält.

**12.** Zusammensetzung nach Anspruch 11, wobei der Weichmacher Wasser, Glycerinester der Essigsäure, Propylenglykol, Dipropylenglykol, Glycerin, Alkylester der Citronensäure und/oder Gemische davon umfaßt.

**13.** Zusammensetzung nach einem der Ansprüche 1 bis 12, wobei sie weiter 0,01 bis 30 Gew.-%, vorzugsweise etwa 5 bis 30 Gew.-%, eines biologisch abbaubaren Polyesters, wie z.B. Polylactid, Polycaprolacton, oder eines Celluloseesters, wie z.B. Celluloseacetat, -propionat oder -butyrat, oder Gemische davon oder Mischester davon enthält.

**14.** Zusammensetzung nach einem der vorhergehenden Ansprüche, wobei sie 5 bis 45 Gew.-% faserförmiges Material enthält.

**15.** Zusammensetzung nach einem der vorhergehenden Ansprüche, wobei die Trockenmasse der Zusammensetzung durch Fasern eines Milchsäurepolymers, durch Cellulosebrei, durch Getreidecellulosefasern, Getreidepentosan, Baumwollfasern, fasern des Abaca-Hanf, Sisalfasem, Ramiefasern, Flachsfasern, Jutefasern oder biologisch abbaubare Glasfasern gebildet wird.

**16.** Zusammensetzung nach Anspruch 1, wobei sie 40 bis 90 Gew.-% Stärkeacetat, 5 bis 30 Gew.-% Cellulosebrei und 5 bis 30 Gew.-% Weichmacher enthält.

**17.** Zusammensetzung nach Anspruch 16, wobei sie weiter 1 bis 30 Gew.-% Celluloseacetat enthält.

**18.** Polymermischung, **dadurch gekennzeichnet, daß** sie eine Polymerzusammensetzung nach Anspruch 1 in Mischung mit einem Thermoplast enthält.

**19.** Stärkezusammensetzung nach Anspruch 1 oder Polymermischung nach Anspruch 18 in Mischung mit Weichmachern und/oder Füllstoffen.

**20.** Stärkezusammensetzung nach Anspruch 1 oder Polymermischung nach Anspruch 18, wobei der verwendete Füllstoff Stärke oder modifizierte Stärke umfaßt.

**21.** Verwendung einer Stärkezusammensetzung nach einem der Ansprüche 1 bis 17 zur Herstellung von Filmen oder Folien.

**22.** Verwendung einer Stärkezusammensetzung nach einem der Ansprüche 1 bis 17 zur Herstellung spritzgegossener Gegenstände und zur Herstellung thermogeformter und blasgeformter Gegenstände, wie z.B. Verpackungen, Taschen, Beutel und Flaschen.

**23.** Verwendung einer Stärkezusammensetzung nach einem der Ansprüche 1 bis 17 zum Beschichten von Papier oder Karton.

**24.** Verwendung einer Stärkezusammensetzung nach einem der Ansprüche 1 bis 17 zur Herstellung von durch Formpressen hergestellten Gegenständen.

**25.** Verfahren zur Herstellung einer kompostierbaren Stärkezusammensetzung nach Anspruch 1, wobei native Stärke verestert wird, um ein weichgemachtes Stärkederivat herzustellen, **gekennzeichnet durch**

- Verestern der Stärke zusammen mit Glycerin, um ein Stärkeacetat und einen Glycerinester der Essigsäure enthaltendes Gemisch herzustellen, und
- Mischen des Gemischs mit einem biologisch abbaubaren faserförmigen Material, um eine Zusammensetzung mit einer diskontinuierlichen Mikrostruktur herzustellen.

**26.** Verfahren nach Anspruch 25, welches das Herstellen einer Zusammensetzung umfaßt, wobei Stärkeacetat die kontinuierliche Phase bildet.

**27.** Verfahren nach Anspruch 25 oder 26, wobei Stärke und Glycerin mit Essigsäureanhydrid verestert werden.

28. Verfahren nach einem der Ansprüche 25 bis 27, wobei Cellulosebrei vor der Veresterung einem Gemisch von Stärke und Glycerin zugegeben wird, wodurch nach der Umsetzung ein weichgemachtes Gemisch erhalten wird, das einen Stärkeester, einen Glycerinester der Essigsäure und einen Celluloseester enthält.

29. Verfahren nach Anspruch 28, wobei Kiefernzellstoff als Cellulosebrei verwendet wird.

30. Verfahren zur Herstellung einer kompostierbaren Stärkezusammensetzung nach Anspruch 1, wobei native Stärke verestert wird, um ein weichgemachtes Stärkederivat herzustellen, **gekennzeichnet durch**

- Verestern von Stärke zusammen mit Cellulosebrei und Glycerin, um ein weichgemachtes Gemisch herzustellen, das Stärkeacetat, Celluloseacetat und einen Glycerinester der Essigsäure enthält, und
- Mischen des Gemischs mit einem biologisch abbaubaren faserförmigen Material, um eine Zusammensetzung mit einer diskontinuierlichen Mikrostruktur herzustellen.

31. Verfahren nach Anspruch 30, welches das Herstellen einer Zusammensetzung umfaßt, wobei das weichgemachte Stärkeacetat die kontinuierliche Phase bildet.

32. Verfahren nach Anspruch 31 oder 32, wobei die Stärke, der Cellulosebrei und das Glycerin mit Essigsäureanhydrid verestert werden.

## Revendications

1. Composition d'amidon susceptible d'être compostée propre à être traitée à l'état fondu, **caractérisée en ce que**

   a) la composition contient :

   - 5 à 99% en poids d'un dérivé d'amidon plastifié et
   - 1 à 95% en poids d'un matériau fibreux biodégradable,

   le dérivé d'amidon étant un ester d'amidon et d'un ou de plusieurs acides carboxyliques aliphatiques en $C_{2-24}$,
   b) la microstructure de la composition est discontinue et formée d'une phase de dérivé d'amidon et d'une phase de matériau fibreux et d'une porosité, s'il y en a.

2. Composition selon la revendication 1, dans laquelle la résistance aux chocs de la composition est supérieure d'au moins 10% à celle du dérivé d'amidon plastifié.

3. Composition selon la revendication 1 ou 2, dans laquelle la composition contient environ 30 à 95% en poids du dérivé d'amidon plastifié et 5 à 70% en poids du matériau fibreux biodégradable.

4. Composition selon l'une quelconque des revendications 1 à 3, dans laquelle la composition contient au moins 50% en poids du dérivé d'amidon plastifié, qui forme la phase continue de la composition, la phase de matériau fibreux formant des interphases discontinues qui améliorent la biodégradation de la composition.

5. Composition selon l'une quelconque des revendications 1 à 4, dans laquelle la matière première des dérivés d'amidon est un amidon naturel ou hydrolysé par voie enzymatique ou chimique, ayant une teneur en amylose de 0 à 100% et une teneur en amylopectine de 100 à 0%.

6. Composition selon la revendication 1, dans laquelle le composant acide carboxylique de l'ester provient de l'acide acétique, de l'acide propionique ou de l'acide butyrique ou d'un mélange de ceux-ci.

7. Composition selon la revendication 1, dans laquelle le composant acide carboxylique de l'ester provient d'un acide gras saturé ou insaturé d'origine naturelle.

8. Composition selon la revendication 7, dans laquelle le composant acide carboxylique provient de l'acide palmitique, de l'acide stéarique ou d'un mélange de ceux-ci.

9. Composition selon la revendication 1, dans laquelle le composant amidon est un ester mixte d'amidon et d'acide acétique et d'acide stéarique.

10. Composition selon l'une quelconque des revendications 1 à 8, dans laquelle le degré de substitution de l'amidon estérifié est de 0,5 à 3, de préférence de 1 à 3, en particulier de 1,5 à 3.

11. Composition selon l'une quelconque des revendications précédentes, dans laquelle la composition contient de plus 0,01 à 50% en poids, de préférence environ 1 à 30% en poids d'un plastifiant.

12. Composition selon la revendication 11, dans laquelle le plastifiant comprend de l'eau, des esters de glycérol d'acide acétique, du propylène glycol, du dipropylène glycol, du glycérol, des esters alkyliques d'acide citrique et/ou leurs mélanges.

13. Composition selon l'une quelconque des revendications 1 à 12, qui contient de plus 0,01 à 30% en poids, de préférence environ 5 à 30% en poids d'un polyester biodégradable, comme un polylactide, une polycaprolactone ou un ester cellulosique, comme un acétate, propionate ou butyrate de cellulose, ou leurs mélanges ou des esters mixtes de ceux-ci.

14. Composition selon l'une quelconque des revendications précédentes, qui contient 5 à 45% en poids de matière fibreuse.

15. Composition selon l'une quelconque des revendications précédentes, dans laquelle la matière sèche de la composition est formée par des fibres d'un polymère d'acide lactique, une pâte de cellulose, des fibres cellulosiques de céréales, du pentosan de céréales, des fibres de coton, des fibres de chanvre Abaca, des fibres de sisal, des fibres de ramie, des fibres de lin, des fibres de jute ou des fibres de verre biologiquement dégradables.

16. Composition selon la revendication 1, qui contient 40 à 90% en poids d'acétate d'amidon, 5 à 30% en poids de pâte de cellulose et 5 à 30% en poids d'agent plastifiant.

17. Composition selon la revendication 16, qui contient de plus 1 à 30% en poids d'acétate de cellulose.

18. Mélange de polymères, **caractérisé en ce qu'**il contient une composition de polymères selon la revendication 1 mélangée avec une matière thermoplastique.

19. Composition d'amidon selon la revendication 1 ou mélange de polymères selon la revendication 18, mélangée avec des plastifiants et/ou des charges.

20. Composition d'amidon selon la revendication 1 ou mélange de polymères selon la revendication 18, où la charge utilisée comprend de l'amidon ou un amidon modifié.

21. Utilisation d'une composition d'amidon selon l'une quelconque des revendications 1 à 17 pour la préparation de films ou de feuilles.

22. Utilisation d'une composition d'amidon selon l'une quelconque des revendications 1 à 17 pour la préparation d'articles moulés par injection et pour la préparation d'articles thermoformés et moulés par soufflage, comme des conditionnements, des sacs, des sachets et des bouteilles.

23. Utilisation d'une composition d'amidon selon l'une quelconque des revendications 1 à 17 pour l'enduction de papier ou de carton.

24. Utilisation d'une composition d'amidon selon l'une quelconque des revendications 1 à 17 pour la préparation d'articles obtenus par moulage par compression.

25. Procédé pour la préparation d'une composition d'amidon susceptible d'être compostée selon la revendication 1, dans lequel l'amidon naturel est estérifié pour produire un dérivé d'amidon plastifié, **caractérisé par** :

- l'estérification de l'amidon avec du glycérol pour produire un mélange contenant de l'acétate d'amidon et un ester glycérolique d'acide acétique, et
- le mélange dudit mélange avec un matériau fibreux biodégradable pour produire une composition ayant une microstructure discontinue.

26. Procédé selon la revendication 25, qui comprend la préparation d'une composition dans laquelle l'acétate d'amidon forme la phase continue.

27. Procédé selon la revendication 25 ou 26, dans lequel l'amidon et le glycérol sont estérifiés avec de l'anhydride acétique.

28. Procédé selon l'une quelconque des revendications 25 à 27, dans lequel de la pâte de cellulose est ajoutée à un mélange d'amidon et de glycérol avant l'estérification, de telle sorte qu'il est obtenu un mélange plastifié après la réaction, qui contient un ester d'amidon, un ester glycérolique d'acide acétique et un ester de cellulose.

29. Procédé selon la revendication 28, dans lequel de la pâte de pin est utilisée comme pâte de cellulose.

30. Procédé pour la préparation d'une composition d'amidon susceptible d'être compostée selon la revendication 1, dans lequel l'amidon naturel est estérifié afin de produire un dérivé d'amidon plastifié, **caractérisé par** :

   - l'estérification de l'amidon avec de la pâte de cellulose et du glycérol pour produire un mélange plastifié contenant de l'acétate d'amidon, de l'acétate de cellulose et un ester glycérolique d'acide acétique, et
   - le mélange dudit mélange avec un matériau fibreux biodégradable pour produire une composition ayant une microstructure discontinue.

31. Procédé selon la revendication 30, qui comprend la préparation d'une composition dans laquelle l'acétate d'amidon plastifié forme la phase continue.

32. Procédé selon la revendication 31 ou 32, dans lequel l'amidon, la pâte de cellulose et le glycérol sont estérifiés avec de l'anhydride acétique.